# EUROPEAN PATENT APPLICATION

(11) **EP 4 328 000 A1**
(43) Date of publication of application: **28.02.2024**
(21) Application number: 22191917.8
(22) Date of filing: 24.08.2022
(51) Int. Cl.: B29C 33/00, B29C 70/44, B29D 99/00, B29C 70/54

(54) **MOLD ARRANGEMENT FOR MANUFACTURING A PREFORM OR PRECAST ELEMENT OF A WIND TURBINE ROTOR BLADE, AND METHOD FOR MANUFACTURING SUCH A PREFORM OR PRECAST ELEMENT**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Mold arrangement for manufacturing a preform or precast element of a wind turbine rotor blade, comprising a mold element (3) having a mold surface (5) and at least one vacuum foil (12, 25) to be fixed to the mold element (3), wherein the mold element (3) is equipped with at least one longitudinal receiving means (7, 7a, 7b) adapted to receive a section (17, 29) of the vacuum foil (12, 25) and a longitudinal sealing means (13, 26) adapted to clamp the vacuum foil (12, 25) airtight in the receiving means (7, 7a, 7b).

## Description

The invention refers to a mold arrangement for manufacturing a preform or precast element of a wind turbine rotor blade, comprising a mold element having a mold surface and at least one vacuum foil to be fixed to the mold element.

Wind turbines usually comprise large rotor blades, which blades can be manufactured using different techniques. One technique comprises the use of a number of premanufactured preform or precast elements, which are made of one or more fiber mats like glass fiber mats and, if needed, one or more core elements, which are embedded in a binder matrix made of hardened resin. These elements are manufactured in a mold arrangement, so that they have a defined shape corresponding to the shape of the blade section. These preform or precast elements are then finally arranged in a blade mold, where the final blade is manufactured.

The mold arrangement for producing such a preform or precast element comprises a mold element, which is usually arranged at a mold carrier. The mold element comprises a mold surface, which defines the shape of the element to be produced. Usually, the mold element has a trough-like shape or mold surface. On the mold surface the items needed for manufacturing the element are arranged. As mentioned, these items usually comprise one or more fiber mats, if needed one or more core elements, and a resin matrix building powder binder, which, after heating, melting and cooling, fixes the fiber mats and the core elements in the given shape. As the building material are separate and loose items, it is necessary to fix them in their arrangement on the mold surface. This is usually done by applying a vacuum. To establish the vacuum, at least one vacuum foil is arranged covering the items, which vacuum foil closes an airtight cavity comprising the building items respectively material, in which cavity the vacuum shall be established. The covering vacuum foil needs to be fixed to the mold element in a sealed manner, so that the cavity is completely airtight. If the mold element respectively the mold surface itself is airtight or vacuum-tight, one single vacuum foil covering the items is sufficient. If the mold element respectively the mold surface is not airtight or vacuum-tight, a lower first vacuum foil needs to be arranged on the mold surface and airtightly fixed or sealed to the mold surface, whereafter the building items are arranged on the lower vacuum foil, which are then covered by the second upper vacuum foil, which is also airtightly fixed to the mold surface. The airtight fixation is usually realized by means of a sticky butyl tape.

In order to establish the vacuum, usually, in addition to the blade building material, also some additional porous material, which realizes a kind of breezer layer that allows an air removal, is also arranged in the airtight cavity. This material may for example comprise an open porous material that allows an air flow, or a three dimensional fiber knit having an open structure, through which the vacuum can be applied.

The airtight sealing of the one or the two vacuum foils using the sticky, gluing butyl tape is very time consuming and cumbersome. But also, when the preform or precast element is finally manufactured, and the vacuum foil or the vacuum foils shall be removed, also this removal is very time consuming and cumbersome. Especially, the mold surface needs a separate cleaning, as some of the butyl tape may still stick to the mold surface, which needs cleaning, which cleaning process may have a negative influence on the next manufacturing process.

It is therefore an object of the invention to provide an improved mold arrangement.

For solving the problem the invention is directed to a mold arrangement for manufacturing a preform or precast element of a wind turbine rotor blade, comprising a mold element having a mold surface and at least one vacuum foil to be fixed to the mold element, which mold arrangement is characterized in that the mold element is equipped with at least one longitudinal receiving means adapted to receive a section of the vacuum foil and a longitudinal sealing means adapted to clamp the vacuum foil airtight in the receiving means.

The airtight fixation of the at least one, or if needed the two vacuum foils is, at least in part, no longer done by using a gluing, sticky tape like a butyl tape, but by an airtight clamping mechanism. According to the invention, the mold surface is equipped with at least one longitudinal receiving means, which is adapted to receive a section of a vacuum foil and a shape corresponding sealing means. The term "longitudinal" means in this circumstance that the receiving means and the sealing means are elongated, preferably linear means, which, when in place, extend in the longitudinal and/or transverse direction of the mold surface respectively the mold element, which mold surface or mold element usually has a rectangular shape having a long longitudinal axis and a relatively short transverse axis. The receiving means may for example extend completely along the longitudinal sides of the mold surface or, depending on the setup of the mold element, of a frame-like sections of the mold element arranged adjacent to the trough-like mold surface. They may also extend in the transverse direction, or may completely circulate around the for example trough-like mold surface area, so that the vacuum foil is clamped around its whole circumference. According to the invention, at least a part of the vacuum foil may be fixed and sealed by this clamping mechanism. If only some sections of the vacuum foil are clamped, the other parts are for example fixed and sealed by using butyl tapes, for example at the top and bottom ends of the mold element, with the butyl tape extending in the transverse direction.

This clamping mechanism, as mentioned, comprises the longitudinal receiving means provided at the mold element respectively the mold surface. When arranging the vacuum foil, the vacuum foil overlaps over this receiving means with a foil section, which foil section is then pushed into the receiving means. Afterwards, or simultaneously with it, the longitudinal sealing means is pressed into the receiving means, thereby clamping the foil section in the sealing means realizing an airtight fixation.

As the invention proposes to establish a clamping mechanism which at least partially clamps the vacuum foil to the mold element respectively the mold surface, or preferably completely clamps the vacuum foil to the mold element, only a small amount of butyl tape or, preferably, no butyl tape is needed for the airtight fixation. This clamping is simple, as it is only necessary to press the foil section and the sealing means in the receiving means. Therefore, this way of sealing can be quickly realized. Also, the removal is very simple, as it is only necessary to pull the sealing means out of the receiving means, whereafter the vacuum foil can immediately be removed. The mold element needs no specific cleaning after the vacuum foils are removed, as no sticky remains are left.

Preferably, the receiving means is groove-like. This groove-like receiving means may, as mentioned, extend along both longitudinal sides of the mold element, and, preferably, also on the transverse sides, so that the groove-like receiving means completely encircles the through-like mold surface. While, when only the longitudinal sides are provided with respective groove-like receiving means, the transverse ends of the vacuum foil need to be fixed or sealed with other sealing means like the butyl tape, whereas, when the groove-like receiving means completely encircles the mold surface, no such butyl tape is needed, as the clamping is realized all around the vacuum foil edges.

Preferably, the receiving means has a circular cross section. The groove-like receiving means has a small slit-like opening, followed by the circular space in which the foil section and the sealing means is received. Altough other geometries like an elliptical or an egg-shaped cross section or a rectangular cross section with rounded edges are possible,the mold element is, as mentioned, equipped with a receiving means. This can be realized in two different ways. According to a first alternative, the receiving means is directly machined into the surface of the mold element. The mold element is machined with a respective tool like a milling cutter, so that the groove-like receiving means is directly worked into the mold element. According to an alternative, the receiving means is provided as a separate receiving element attached to the mold element. In this embodiment, the receiving means is like a rope or core being provided with a receiving groove. This rope or core may for example be arranged in a respective attachment groove machined into the mold element, or may be directly attached to the surface of the mold element. Both alternatives, i.e. the direct machining of the receiving means, or the arrangement of a separate receiving means, allow for the simple equipment of the mold element with a respective fixing geometry. Further, if two parallel groove-like receiving sections are needed for clamping a lower and an upper foil, these two receiving sections may be provided at a common receiving means, which comprises two respective receiving grooves, and which is attached to the mold element surface. This attachment on the surface may be done by gluing.

As mentioned, it is possible that the mold element is equipped with two or more separate receiving means in a parallel and side-offset arrangement. If a lower and an upper vacuum foil are used, both need, at least in part, to be clamped. For each vacuum foil, a separate receiving means is needed. Receiving means for the lower vacuum foil are arranged closer to the mold surface or the trough-like area than the receiving means for the upper, covering vacuum foil.

So, if the receiving means for example extend along the longitudinal sides or edges of the mold element, at each side or edge two parallel groove-like receiving means are provided, wherein the two inner receiving grooves are used for fixing the lower vacuum foil, while the two outer receiving grooves are used for fixing the upper vacuum foil. The same arrangement is provided, when also the transverse ends are equipped with the respective receiving grooves.

As mentioned, the equipment of the mold element with two or more separate receiving means in a parallel and side-offset arrangement allow the airtight fixation of at least a first vacuum foil engaging the first receiving means with the respective foil section, and a second vacuum foil engaging the second receiving means with the separate foil section. But, when only the upper vacuum foil is used, as the mold surface itself is airtight or vacuum-tight, it is also possible to fixate the single upper vacuum foil on both first and second receiving means, so that the single vacuum foil engages both receiving means with separate foil sections, which are clamped using separate sealing means.

The sealing means itself is, according to the invention, adapted to clamp the vacuum foil section against the wall of the receiving means. The sealing means is like a weld clamping the foil in the groove. This provides a complete and full fit of the foil section to the complete surface of the wall of the, preferably circular, receiving groove, so that the foil section is perfectly fitted into the groove and sealed. Especially, the circular cross section also secures that neither the sealing means nor the foil section can slip out of the receiving groove, as they are fixed also due to the circular undercut geometry of the groove.

The sealing means may, according to a first alternative, be an inflatable hose. This hose, when deflated, can simply be arranged together with a foil section in the receiving means respectively the receiving groove. When the hose is completely inserted, it is simply inflated, for example by using a little pump or the like, so that it widens, thereby pressing the foil section against the wall of the receiving means respectively the receiving groove. The pressure in the hose needs to be maintained in order to maintain the press fit. When the sealing means shall be removed, it is only necessary to release the pressure and to deflate the hose, which then collapses and can easily be put out of the receiving groove together with the foil section.

According to an alternative embodiment, the sealing means may also be a compressible cord. This elastic cord can be compressed, so that it has a small or thin shape, which allows its insertion into the receiving means respectively the receiving groove. Right after this, when the compression is no longer given, the elastic cord widens and presses the foil section against the wall of the receiving means respectively the groove. Also, this compressible cord may simply be pulled out of the receiving means, when the foil shall be detached.

As mentioned, the or each receiving means may circulate the mold element. In this embodiment, the receiving means comprises two longitudinal sections and two transverse section, which connect to each other. One single sealing means like the inflatable hose or the compressible cord is used for the airtight fixation of the vacuum foil. In an alternative, at each longitudinal side of the mold the or each receiving means extends. Here, only the longitudinal sides or edges of the mold element are equipped with the longitudinal receiving means respectively receiving grooves, while at the transverse ends other sealing means like the butyl tape are used for the airtight fixation.

The mold element may be a one-piece element, comprising a for example trough-like mold section, which defines the mold surface, and for example two longitudinal element sections directly attached to the trough-like middle section. With these edge sections the mold element for example rests on the mold carrier. The receiving means are provided at these edge sections. In an alternative, the mold element may comprise a central member defining the, for example through-like, mold surface and the frame member comprising the or all receiving means, which frame member is removably arranged. In this embodiment, the mold element is a multi-part element, comprising at least two parts, i.e. the central member with the mold surface and a frame member, which preferably has a rectangular shape. When arranged at the mold carrier, the central element is separately arranged and fixated to the mold carrier. After all vacuum foils and items are arranged and the vacuum is applied, it is possible to remove the frame member together with the vacuum bag comprising, in this embodiment, the upper and the lower vacuum foil, which are attached in the inventive manner to the frame member, so that the frame member can be used as a transfer member or a handling frame. This is possible, as due to the applied vacuum the vacuum bag with the vacuumized items maintains its shape. So, the vacuum bag can be lifted from the mold surface of the central member, which still remains at the mold carrier. The vacuum in the bag certainly is still maintained, while the vacuum between the lower vacuum foil and the mold surface is released for lifting the vacuum bag from the mold surface.

The invention further refers to a method for manufacturing a preform or precast element for a wind turbine rotor blade, using a mold arrangement as mentioned above, which method comprises at least one step of arranging of a vacuum foil either below or above some element building material and attaching the vacuum foil to the mold element by arranging a section of the vacuum foil in the receiving means of the mold element and by inserting a sealing means in the receiving means clamping the section against the wall of the receiving means, wherein the vacuum foil is sealed towards the mold element completely by the sealing means or by the sealing means and some additional sealing. The inventive method therefore comprises at least one step for activating or using the inventive clamping mechanism for at least in part clamping and sealing the vacuum foil section to the mold element. Certainly, when the element building items respectively material is arranged and finally covered by the sealed vacuum foil, the manufacturing process proceeds, either by heating the arrangement respectively the element building items directly on the mold, thereby melting the binder material, which embeds the fiber layers respectively laminates and the core elements like balsa elements etc. in the molten resin matrix, whereafter this matrix is cooled and hardened for firmly fixing the building material in the given shape. But, as mentioned above, when for example a separate frame member is provided, the vacuumized arrangement may also be removed and transferred to the further processing, for example to an oven, where the heating is performed.

According to the inventive method, a lower first vacuum foil may be attached to the mold element with one or more first sealing means and an upper second vacuum foil may be attached to the mold element with one or more second sealing means. The lower first vacuum foil is needed, when the mold surface itself is not airtight or vacuum-tight to provide the airtight base, while the upper second vacuum foil encloses the vacuum cavity. But, when the mold surface is airtight or vacuum-tight, no lower vacuum foil is needed, but only one upper covering vacuum foil.

Further, it is possible to additionally fixate the vacuum foils to each other by gluing or welding. According to this embodiment, the two vacuum foils are airtightly fixed together, after the vacuum has been applied. This is necessary, when the vacuum bag, realized by the two vacuum foils, shall be removed from the mold arrangement, while the heating and cooling process has not yet been performed and the element building material is not fixed. By gluing or welding the vacuum foils, the vacuum is upheld, so that the airtight vacuum bag can be removed after the clamping mechanism respectively the other sealed fixation means are opened.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle illustration of an inventive mold arrangement, showing the arrangement of a vacuum foil,
- Fig. 2: a principle illustration of a part of the mold element with a receiving means according to a first embodiment,
- Fig. 3: a principle illustration of a part of the mold element with a receiving means according to a second embodiment,
- Fig. 4: a principle illustration of the process of fixating a vacuum foil section in the receiving means using an inflatable sealing means,
- Fig. 5: the arrangement of fig. 4 in the fixated, sealed position,
- Fig. 6: a principle illustration of a sealing means comprising an inflatable hose and a valve body,
- Fig. 7: a principle illustration of the arrangement of a lower vacuum foil,
- Fig. 8: a cross section illustration of the arrangement of fig. 7,
- Fig. 9: a principle illustration of the arrangement of the upper vacuum foil,
- Fig. 10: a cross section illustration of the arrangement of fig. 9,
- Fig. 11: a partial illustration of the arrangement of fig. 10 with both vacuum foils being welded together,
- Fig. 12: the removal of the vacuum bag welded according to fig. 11,
- Fig. 13: a cross section illustration of a part of a mold element of a further embodiment having a separate frame member, and

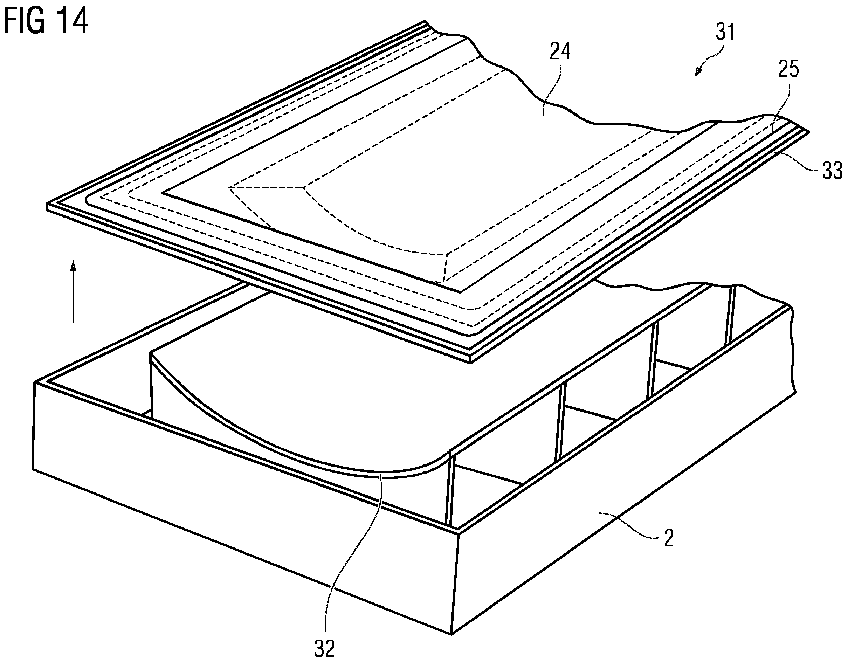

- Fig. 14: a principle illustration of the inventive mold element of a second embodiment comprising a mold element according to fig. 13.

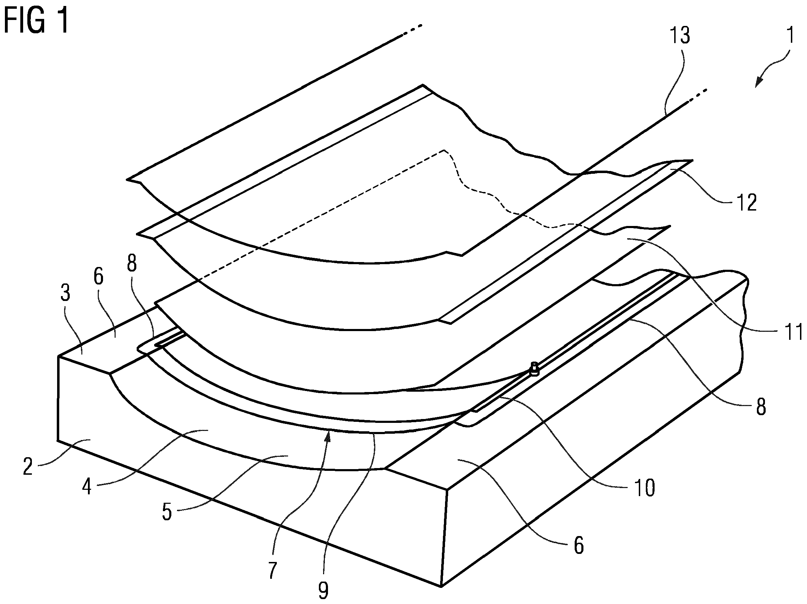

Fig. 1 shows a principle illustration of an inventive mold arrangement 1, comprising a mold carrier 2, to which a mold element 3 is attached. The mold element 3 comprises a trough-like center section 4 with a concave mold surface 5 and at least two edge members 6 directly attached to the center member 4. The mold element 3 is a one-piece element.

The mold element 3 is provided at its upper surface with a groove-like receiving means 7, being realized as one circulating groove having lateral longitudinal receiving grooves 8 extending in the longitudinal direction and two receiving grooves 9 extending in the transverse direction, wherein the grooves 8, 9 are connected to each other thereby building a complete groove-like receiving means 7 extending around the whole circumference of the mold surface. As shown, the longitudinal grooves 8 are arranged at the side members 6, while the transversal grooves are provided at the center section 4.

Fig. 1 is an exploded view showing some of the items necessary to manufacture a preform or precast element. These items comprise a for example tube-like "Axel net", which is a porous tube for example knitted from a polymer fiber, which porous tube allows for an air flow when applying a vacuum, as explained later. This porous tube respectively Axel net extends parallel to the respective receiving means 7.

Further, a porous mat-like material 11 made as a breathable micro-porous fiber material is shown, which is placed on the mold surface 5 and which may also extend over the Axel net. Also, this porous, mat-like material 11 is used for enabling an air flow when applying a vacuum. It is to be noted that the arrangement of the Axel net respectively the porous tube 10 and the porous material 11 may also be vice versa.

Fig. 1 further shows a vacuum foil 12, which, when attached, covers the porous tube 6 and the porous material 11 and extends also over the receiving means 7 respectively the grooves 8, 9. When arranged, it overlaps this receiving means 7 and is fixated in it in a clamped way by using a sealing means 13 for example in form of an inflatable hose or a compressible rope or core or the like. Like the circulating receiving means 7, also the sealing means 13 circles around the whole mold surface 5, so that the vacuum foil 12 can be clamp fixated and sealed along its longitudinal and transversal edges. A section of the edge of the vacuum foil 12 is pressed together with the sealing means 13 into the groove-like receiving means 7, so that the section of the vacuum foil 12 is tightly pressed into the receiving means 7.

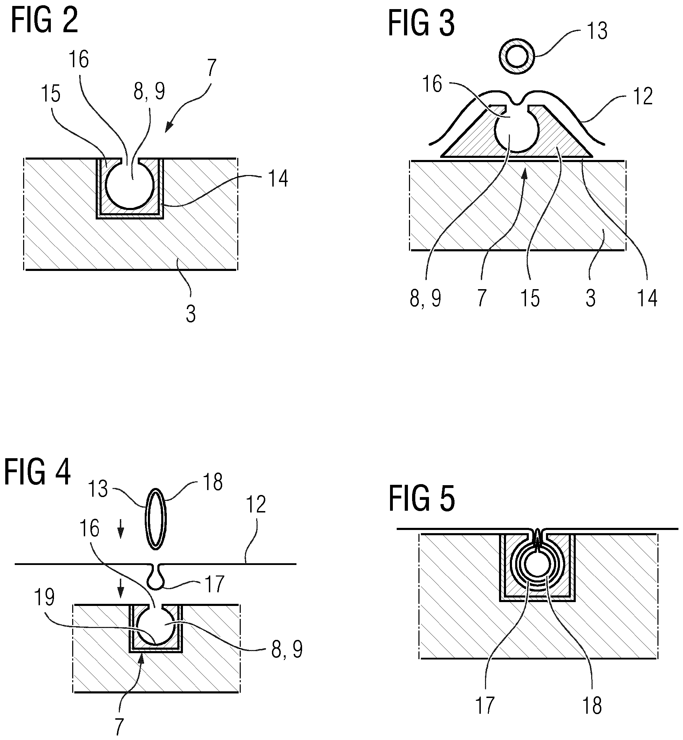

Fig. 2 shows a first embodiment of the equipment of the mold element 3 with a receiving means 7. In this embodiment a rectangular groove 14 is machined into the surface of the mold element 3. Into this groove 14, by means of a glue, a separate receiving element 15 realizing the receiving means 7 and comprising the respective 8, 9 is attached. As shown, the groove 8, 9 has a circular cross section and is open via a small slit 16, through which the section of the vacuum foil 12 and the sealing means 13 are pressed into the groove 8, 9.

Fig. 3 shows another embodiment, where the receiving means is arranged on the surface of the mold element 3. Again, the receiving means 7 is realized by means of a receiving element 15 being provided with the respective grooves 8, 9, which are open through a slit 16. The receiving element 15 is fixated to the surface of the mold element 3 again my means of a glue. The section of the vacuum foil 12, which is shown in fig. 3, is again pushed into the groove 8, 9 together with the respective sealing means 13 here in form of a hose or tube.

While figures 2 and 3 show respective separate profiles as the respective receiving element 15, it is also possible to directly machine the respective groove 8, 9 in the mold element 3 by using a milling tool or the like.

Fig. 4 and 5 show the fixation of the vacuum foil 12 at the respective receiving element 7. In fig. 4 the vacuum foil 12 overlaps the receiving element 7 respectively the groove 8, 9. A receiving section 17 is arranged above the slit 16 to be inserted through the slit 16 in the groove 8, 9. Further, the sealing means 13 in form of an inflatable hose 18 is shown. For fixating the vacuum foil, the section 17 is pressed into the circular groove 8, 9 together with the inflatable hose 18. To make the joint airtight, a suitable air pressure (or fluid pressure using e.g. water) is established in the hose 18, so that the hose 18, which may be made of rubber or an elastic polymer, expands. The pressure must be high enough for the hose to expand and completely fill the entire circular groove 8, 9, so that the section 17 is pressed against the wall 19 of the groove 8, 9 and an airtight fixation is realized, as shown in fig. 5. The arrangement is held in place as long as the pressure in the hose 18 is maintained. When the pressure is released, the hose 18 can be pulled out of the groove 8, 9 together with the section 17.

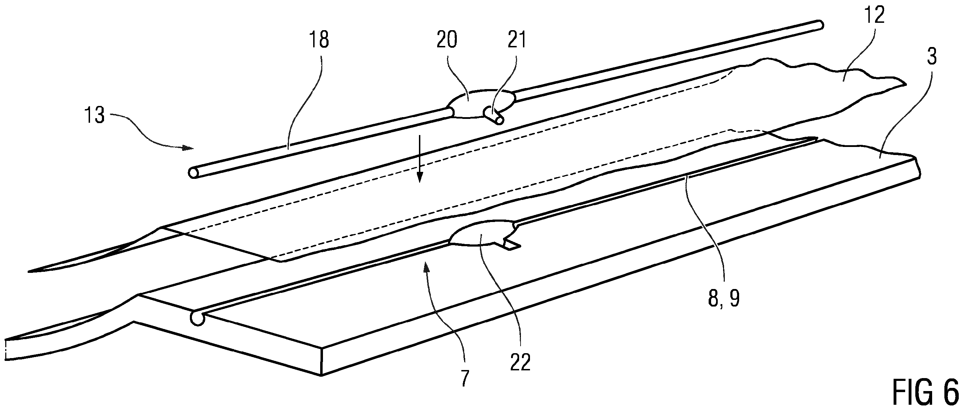

As mentioned, when using such an inflatable or expendable sealing means 13 respectively hose 18, the pressure needs to be applied. Fig. 6 shows an embodiment for inflating the sealing means 13. It shows the sealing means 13 comprising the inflatable hose 18. The ends of the hose 18 are tightly fixated to a valve body 20 having a connection piece 21, to which for example a pressure pump or the like may be connected. As the sealing means 13 is place on top of the vacuum foil 12 and presses it into the groove 8, 9, the receiving means 7 also comprises a receptacle 22 for the valve body 20. This is necessary to also have an airtight fit of the vacuum foil 12 at the mold element 3 in the area of the valve body 20.

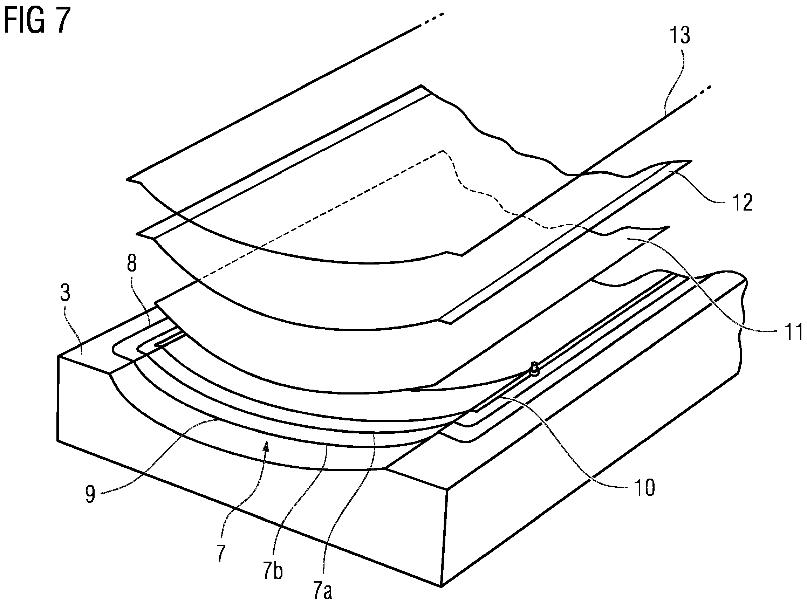

Figures 7 - 10 show principal steps for arranging all necessary items for producing a preform or precast element at the inventive mold arrangement. Fig. 7, which is comparable to fig. 1, shows in an exploded view the arrangement of the Axel net respectively porous tube 10 and the mat-like porous material 11 at the mold element 3, which is equipped with the respective receiving means 7 comprising the longitudinal grooves 8 and the transversal grooves 9. Also, the vacuum foil 12 is shown, which in this embodiment is the first lower vacuum foil 12, as it is attached to the mold element 3 forming a bottom layer of the finally built vacuum bag. Fig 7 also shows the sealing means 13, which is as mentioned an inflatable hose or a compressible cord or the like.

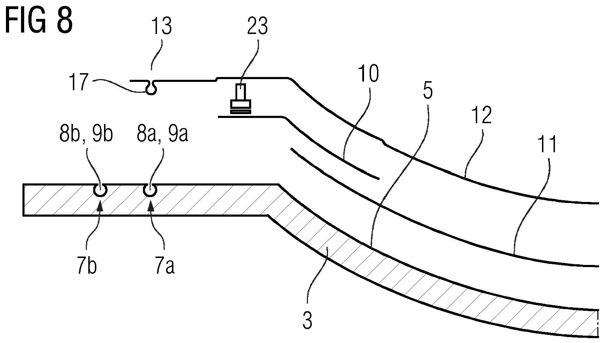

Fig. 8 shows a cross section of the arrangement of fig. 7 in an exploded view. It shows the mold element 3 which, in this embodiment, comprises two separate receiving means 7a, 7b, each comprising longitudinal and transversal grooves 8a, 9a and 8b, 9b, which are also shown already in fig. 7.

The figure also shows the porous mat-like material 11, which in this embodiment is arranged below the Axel net or porous tube 10. The porous mat-like material 11 is in this embodiment directly placed on the mold surface 5 followed by the respective Axel net or porous layer 10, which in this embodiment is a layer, but not a tube as in fig. 1.

Further, an air outlet 23 is shown, which is arranged below the first vacuum foil 12 and which extends through the vacuum foil 12, so that air can be evacuated from the area between the mold surface 5 respectively the mold element 3 and the first vacuum foil 12 for tightly fitting the vacuum 12 to the mold surface 5in a perfectly form fitted manner.

The vacuum foil 12 is then finally placed on top of the described arrangement and engages with the section 17 into the first receiving means 7a, where it is fixed with the respective first sealing means 13.

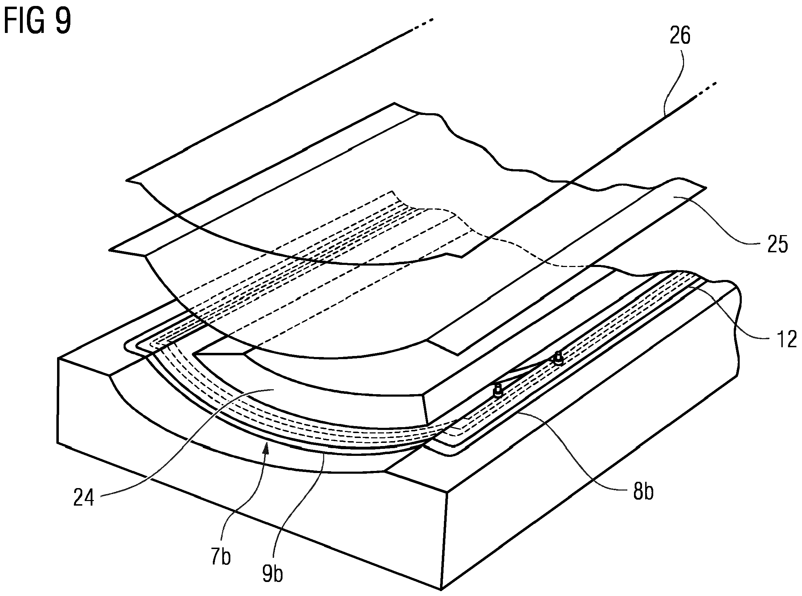

Afterwards, when a vacuum has been established to the arrangement of fig. 7, 8 and the vacuum foil 12 is tightly fixed, the element building material 24 is placed on top of the first lower vacuum foil 12 as shown in fig. 9. This material comprises fiber mats or fiber layers, i.e. laminate elements, and if needed some core material made from balsa wood or foam or the like, and a binder or binding agent, preferably in powder form, which is distributed over the whole area.

On top of the element building material 24, a second upper vacuum foil 25 is arranged, which completely overlaps the building material 24 and which also completely overlaps the lower first vacuum foil. It also overlaps the second receiving means 7b with the still uncovered grooves 8b, 9b, into which it is fixed using a second sealing means 26, which preferably is the same as the sealing means 13.

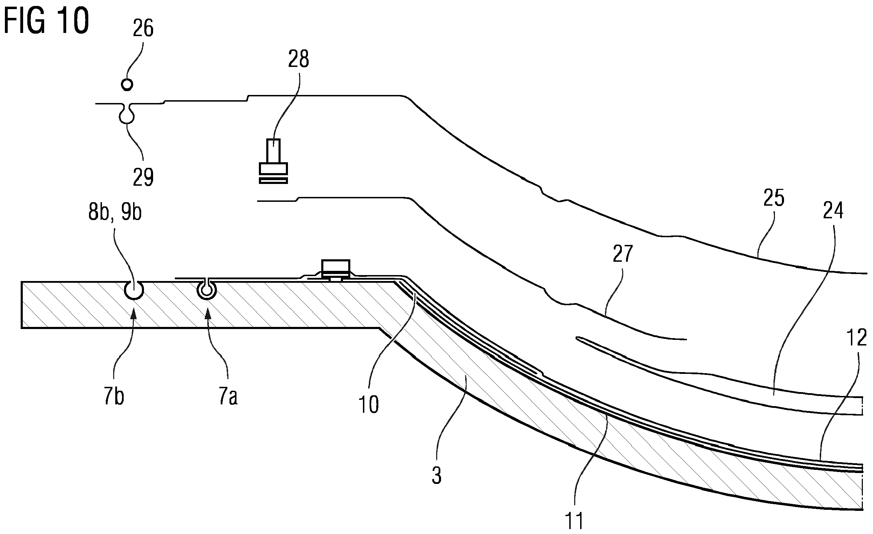

The exploded view of fig. 10 shows this setup. At the mold element 3, already vacuum fixed, is the first vacuum foil 12, under which the porous mat-like material 11 and the porous material 10 is arranged. The building material 24 is placed on the first vacuum foil 12, together with some additional porous material 27, which overlaps the building material 24. The porous material 27, again in this embodiment mat-like, is coupled to another air outlet 28, which finally extends through the second vacuum foil 25, and through which the air between the first and the second vacuum foil 25 is evacuated.

Finally, the second upper vacuum foil 25 is put in place, which overlaps the arrangement below it and which also overlaps the outer second receiving means 7b with its open grooves 8b, 9b, into which the foil section 29 and the second sealing means 26 are pressed. Finally, the sealing means 26 is for example pressurized, so that the foil section 29 is firmly clamped against the walls of the grooves 8b, 9b. As now the vacuum bag realized by both vacuum foils 12, 25 is built and airtight fixated to the mold element 3, a vacuum can be established between the vacuum foils 12, 25 through the air outlet 28, again using a respective pump or the like, so that the vacuum chamber between the vacuum foils 12, 25 is evacuated, thereby firmly fixing the building material 24, 28 in its respective position.

The further processing of the building material 24 may be done directly in the mold arrangement by heating the building material 24 for melting the resin binder material, into which molten resin the glass fiber mats or core material etc. is embedded. Afterwards, the resin cools and hardens, so that a rigid preform or precast element is built. After that, the upper vacuum foil 25 is removed simply by reducing the pressure in the second sealing means 26 and pulling it out of the receiving means 7b, whereafter the vacuum foil 25 can be removed and the hardened preform or precast element can be taken from the mold.

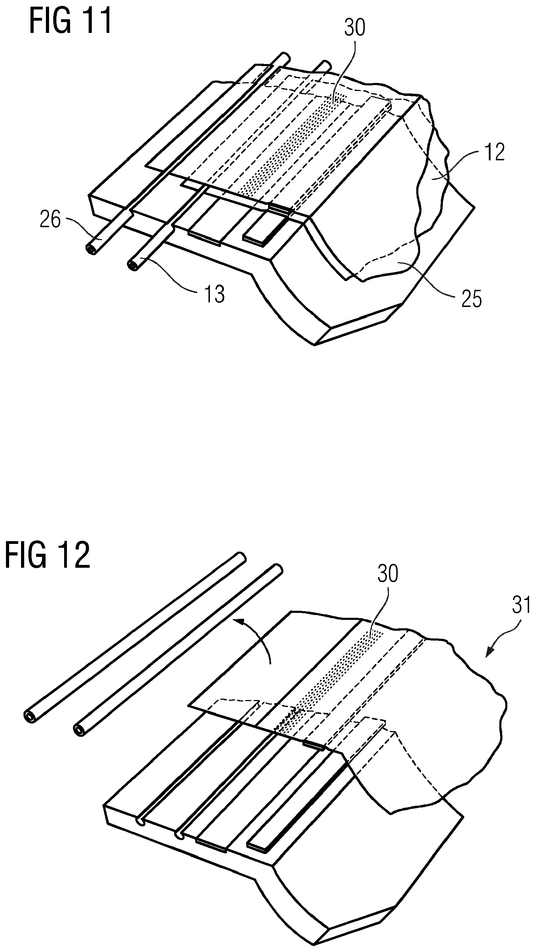

It is also possible to perform the heating and cooling process at another station. For transporting the building material 24, arranged in the vacuum bag, to this station, it is necessary to ensure that the vacuum in the vacuum bag is maintained, when it is lifted from the mold surface 5. To ensure this, figures 11 and 12 show the possibility to weld the lower and the upper vacuum foil 12, 25 together along their overlapping edges to produce an airtight welded seem 30 extending all around the overlapping edges as shown in figures 11 and 12. This can be done by heat welding or ultrasonic welding or the like. Instead of welding, also a sandwich butyl tape can serve this purpose.

After the vacuum bag is airtightly closed, the pressure in the two expending sealing means 13, 26 is lowered, so that they can be removed as shown in fig. 12. Afterwards, the complete vacuum bag 31 comprising the building material 24, which maintains its shape due to the applied vacuum, can be lifted and removed.

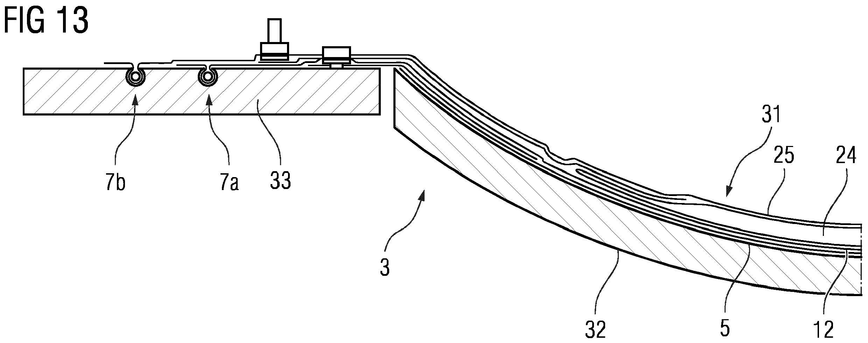

Fig. 13 shows an embodiment of a mold element 3, which comprises a central trough-like member 32 having the mold surface 5, where the building material 24 etc. is arranged. The mold element 3 further comprises a frame member 33 having a rectangular shape and extending along the longitudinal and transversal edges of the center member 32. At his frame member 33 the receiving means 7a, 7b are provided, in which, see fig. 13, the foil sections 17, 29 are clamped with the sealing means 13, 26. As, again, a vacuum bag 31 is built by the lower first vacuum foil 12 and the upper second vacuum foil 25, which are again welded together as described before, and as the whole inner of the vacuum bag 31 can be evacuated, it is possible to remove the complete vacuum bag 31 with the vacuumized building material 24 by lifting the frame member 33 from the mold carrier 2, at which only the central member 32 remains. It is only necessary to remove the vacuum between the mold surface 5 and the lower vacuum foil 12, if given. The frame member 33 therefore is a handling frame allowing for transporting the vacuum fixed building material 24 in the vacuum bag 31. This arrangement may then either be stored until it is further processed, or may directly be moved to the further processing station, where it is heated and cooled etc.

Besides using it for preparing preform elements based only essentially dry material, the inventive vacuum sealing or clamping method is also applicable for casting of resin-based composite components once the vacuum has been established in the vacuum bag, into which the resin may then be introduced via appropriate entry (and exit) hoses, e.g. by resin injection into the vacuum bag cavity to prepare the fiber reinforced composite component.

Although the present invention has been described in detail with reference to the preferred embodiment, the present invention is not limited by the disclosed examples from which the skilled person is able to derive other variations without departing from the scope of the invention.

## Claims

1. Mold arrangement for manufacturing a preform or precast element of a wind turbine rotor blade, comprising a mold element (3) having a mold surface (5) and at least one vacuum foil (12, 25) to be fixed to the mold element (3), **characterized in that** the mold element (3) is equipped with at least one longitudinal receiving means (7, 7a, 7b) adapted to receive a section (17, 29) of the vacuum foil (12, 25) and a longitudinal sealing means (13, 26) adapted to clamp the vacuum foil (12, 25) airtight in the receiving means (7, 7a, 7b).

2. Mold arrangement according to claim 1, **characterized in that** the receiving means (7, 7a, 7b) is groove-like.

3. Mold arrangement according to claim 2, **characterized in that** the receiving means (7, 7a,7b) has a circular, an elliptical or an egg-shaped cross section or a rectangular cross section with rounded edges.

4. Mold arrangement according to one of the preceding claims, **characterized in that** the receiving means (7, 7a, 7b) is directly machined into the surface of the mold element (3), or that the receiving means (7, 7a, 7b) is provided at a separate receiving element (15) attached to the mold element.

5. Mold arrangement according to one of the preceding claims, **characterized in that** the mold element (3) is equipped with two or more separate receiving means (7a, 7b) in a parallel and side-offset arrangement.

6. Mold arrangement according to claim 5, **characterized in that** the vacuum foil (12, 25) is adapted to engage the separate receiving means (7a, 7b) with separate sections, or that at least a second vacuum foil (25) is provided, wherein the first vacuum foil (12) engages the first receiving means (7a) and the second vacuum foil (25) engages the second receiving means (7b).

7. Mold arrangement according to one of the preceding claims, **characterized in that** the sealing means (13, 26) is adapted to clamp the vacuum foil section (17, 29) against a wall (19) of the receiving means (7, 7a, 7b).

8. Mold arrangement according to claim 7, **characterized in that** the sealing means (13, 26) is an inflatable hose (18), or that the sealing means (13, 26) is a compressible cord.

9. Mold arrangement according to claim 8, **characterized in that** the sealing means (13, 26) comprises a valve element (20) for inflating and deflating the hose (18).

10. Mold arrangement according to one of the preceding claims, **characterized in that** the or each receiving means (7, 7a, 7b) circulates the mold element (3), or that at each longitudinal side of the mold element (3) the or each receiving means (7, 7a, 7b) extends.

11. Mold arrangement according to one of the preceding claims, **characterized in that** the mold element (3) comprises a central member (32) defining the mold surface (5) and a frame member (33) comprising the or all receiving means (7, 7a, 7b), which frame member (33) is removably arranged.

12. Method for manufacturing a preform or precast element for a wind turbine rotor blade, using a mold arrangement (1) according to one of the preceding claims, comprising at least one step of arranging of a vacuum foil (12, 25) either below or above some element building material (24) and attaching the vacuum foil (12, 25) to the mold element (3) by arranging a section (17, 29) of the vacuum foil (12, 25) in the receiving means (7, 7a, 7b) of the mold element (3) and by inserting a sealing means (13, 26) in the receiving means (7, 7a, 7b) clamping the section (17, 29) against the wall (19) of the receiving means (7, 7a, 7b), wherein the vacuum foil (12, 25) is sealed towards the mold element (3) completely by the sealing means (13, 26) or by the sealing means (13, 26) and some additional sealing.

13. Method according to claim 12, **characterized in that** a lower first vacuum foil (12) is attached to the mold element (3) with one or more first sealing means (13) and that an upper second vacuum foil (25) is attached to the mold element (3) with one or more second sealing means (26) .

14. Method according to claim 13, **characterized in that** the vacuum foils (12, 25) are fixed to each other by gluing or welding.
